(19) Europäisches Patentamt / European Patent Office / Office européen des brevets

(11) **EP 3 840 418 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(51) Internationale Patentklassifikation (IPC):
**H04R 25/00** *(2006.01)*

(21) Anmeldenummer: **20207276.5**

(22) Anmeldetag: **12.11.2020**

(52) Gemeinsame Patentklassifikation (CPC):
**H04R 25/70; H04R 25/505;** H04R 25/507;
H04R 2225/41

(54) **VERFAHREN ZUR ANPASSUNG EINES HÖRINSTRUMENTS UND ZUGEHÖRIGES HÖRSYSTEM**

METHOD FOR FITTING A HEARING AID AND CORRESPONDING HEARING SYSTEM

PROCÉDÉ D'ADAPTATION D'UN INSTRUMENT AUDITIF ET SYSTÈME AUDITIF ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019 DE 102019220408**

(43) Veröffentlichungstag der Anmeldung:
**23.06.2021 Patentblatt 2021/25**

(73) Patentinhaber: **Sivantos Pte. Ltd.**
**Singapore 539775 (SG)**

(72) Erfinder:
• **AUBREVILLE, Marc**
**90443 Nürnberg (DE)**
• **PETRAUSCH, Stefan**
**91056 Erlangen (DE)**
• **HOYDAL, Erik Harry**
**0584 Oslo (NO)**

(74) Vertreter: **FDST Patentanwälte**
**Nordostpark 16**
**90411 Nürnberg (DE)**

(56) Entgegenhaltungen:
EP-A1- 2 306 756    EP-A1- 3 236 673
WO-A1-2017/118477    US-A1- 2019 102 142
US-A1- 2019 149 927

**Beschreibung**

Die Erfindung betrifft ein Verfahren zur Anpassung eines Hörinstruments nach dem Oberbegriff des Anspruchs 1. Die Erfindung betrifft weiterhin ein zugehöriges Hörsystem nach dem Oberbegriff des Anspruchs 9. Ein solches Verfahren und ein solches Hörinstrument sind aus WO 2017/118477 A1 und EP 2 306 756 A1 bekannt.

Weitere Hörinstrumente und Verfahren zu deren Anpassung sind aus US 2019/149927 A1, US 2019/102142 A1 und EP 3 236 673 A1 bekannt.

Als "Hörinstrument" werden nachfolgend allgemein Geräte bezeichnet, die ein Audiosignal eines Umgebungsschall aufnehmen, signaltechnisch modifizieren, insbesondere verstärken, und ein entsprechend modifiziertes Audiosignal an das Gehör eines Nutzers (Trägers) des Hörinstruments abgeben. Eine klassischerweise als "Hörgeräte" bezeichnete Unterklasse solcher Hörinstrumente ist zur Versorgung von Minderhörenden eingerichtet, die im medizinischen Sinne an einem Hörverlust leiden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als elektroakustischer Wandler, insbesondere als Miniaturlautsprecher realisiert und wird in diesem Fall auch als "Hörer" (Receiver) bezeichnet. Darüber hinaus stehen auf dem Markt auch Knochenleitungshörhilfen, implantierbare oder vibrotaktile Hörhilfen zur Verfügung. Bei diesen erfolgt die Stimulation des geschädigten Gehörs entweder mechanisch oder elektrisch. Zusätzlich zu den vorbeschriebenen klassischen Hörgeräten werden Hörinstrumente zur Unterstützung des Hörvermögens von normalhörenden Nutzern angeboten. Solche auch als "Personal Sound Amplification Products" oder "Personal Sound Amplification Devices" (kurz: "PSAD") bezeichnete Hörinstrumente sind von der Struktur her ähnlich aufgebaut wie klassische Hörgeräte und weisen ebenfalls die oben beschriebenen Komponenten, also einen Eingangswandler, eine Signalverarbeitungseinheit sowie einen Ausgangswandler auf.

Um den zahlreichen individuellen Bedürfnissen verschiedener Träger entgegenzukommen, haben sich unterschiedliche Bauformen von Hörinstrumenten etabliert. Bei sogenannten BTE-Hörinstrumenten (Behind-The-Ear, auch Hinter-dem-Ohr, kurz HdO) wird ein Gehäuse, das die Batterie sowie ggf. weitere Komponenten wie Eingangswandler, Signalverarbeitung, etc. enthält, hinter dem Ohr getragen. Der Ausgangswandler kann dabei (bei sogenannten Ex-Hörer- oder Receiver-in-the-Canal-(kurz RIC) Hörinstrumenten direkt im Gehörgang des Trägers angeordnet sein. Alternativ ist der Ausgangswandler innerhalb des hinter dem Ohr getragenen Gehäuses angeordnet. In diesem Fall leitet ein, auch als "Tube" bezeichneter Schallschlauch das Audiosignal des Ausgangswandlers von dem Gehäuse zum Gehörgang. Bei sogenannten ITE-Hörinstrumenten ("In-the-Ear", auch "In-dem-Ohr", kurz IdO) wird ein Gehäuse, welches sämtliche funktionale Komponenten des Hörinstruments enthält, zumindest teilweise im Gehörgang getragen. Sogenannte CIC-Hörinstrumente (Completely-in-Canal) sind den ITE-Hörinstrumenten ähnlich, werden jedoch vollständig im Gehörgang getragen.

Moderne Hörinstrumente umfassen regelmäßig eine Vielzahl von Signalverarbeitungsfunktionen wie z.B. frequenzselektive Verstärkung, dynamische Kompression, adaptive Geräuschunterdrückung, Windgeräuschunterdrückung sowie Sprach- oder Stimmerkennung, deren Betriebsweise durch eine Vielzahl von Signalverarbeitungsparametern (z.B. Verstärkungsfaktoren, Kompressions-Kennlinien, etc.) einstellbar ist. Die richtige Einstellung der Signalverarbeitungsparameter ermöglicht eine Optimierung des Hörinstruments an die individuell verschiedenen Bedürfnisse des Nutzers, insbesondere an das Hörvermögen des Nutzers, und ist deshalb für den erfolgreichen Einsatz des Hörinstruments von entscheidender Bedeutung. Aufgrund der Vielzahl der Signalverarbeitungsparameter und ihrer komplexen Zusammenwirkung kann die Anpassung des Hörinstruments in der Regel nicht (oder nur in unzureichender Weise) von dem Nutzer selbst vorgenommen werden. Vielmehr ist die (auch als "Fitting" bezeichnete) Anpassung der Hörgeräteparameter ein iterativer und langwieriger Prozess, der üblicherweise mehrere Treffen zwischen dem Nutzer des Hörinstruments und einem Audiologen voraussetzt. Dieser Anpassungsprozess wird dabei insbesondere dadurch erschwert, dass reale im Alltag auftretende Hörsituationen in der Praxis des Audiologen nicht zufriedenstellend abgebildet werden können, so dass die gewählten Parametereinstellungen nicht vor Ort auf ihre Alltagstauglichkeit getestet werden können. Hinzu kommt, dass viele Nutzer auftretende Probleme oft mangels audiologischer Fachkenntnisse nicht hinreichend präzise formulieren können, um dem Audiologen eine zielgerichtete Abhilfe zu ermöglichen.

Der Erfindung liegt die Aufgabe zugrunde, eine effektive Anpassung eines Hörinstruments zu ermöglichen. Die Anpassung soll dabei insbesondere ohne Beteiligung eines Audiologen, sondern vielmehr automatisiert durchführbar sein und auch auf Seiten des Nutzers keine audiologischen Kenntnisse erfordern.

Bezüglich eines Verfahrens zur Anpassung eines Hörinstruments wird diese Aufgabe erfindungsgemäß gelöst durch die Merkmale des Anspruchs 1. Bezüglich eines Hörsystems wird die Aufgabe erfindungsgemäß gelöst durch die Merkmale des Anspruchs 9. Vorteilhafte Ausführungsformen und Weiterentwicklungen der Erfindung sind in den Unteransprüchen und der nachfolgenden Beschreibung dargelegt.

Die Erfindung geht aus von einem Hörinstrument der eingangs beschriebenen Art, in welchem ein mittels eines Eingangswandlers aufgenommenes Audiosignal eines Umgebungsschalls nach Maßgabe einer Vielzahl von Signalverarbeitungsparametern modifiziert wird. Bei dem Eingangswandler handelt es sich insbesondere um einen akusto-elektrischen Wandler, insbesondere ein Mikrofon. Bei dem Audiosignal handelt es sich dabei um ein elektrisches Signal, das eine Information über den aufgenommenen Umgebungsschall transportiert. Bei den Signalverarbeitungsparametern handelt es sich um Größen (d.h. um Variablen im informationstechnischen Sinne), wobei jeder Signalverarbeitungsparameter mit einem veränderbaren Wert belegt werden kann. Signalverarbeitungsparameter können eindimensional (skalar) oder mehrdimensional (z.B. vektoriell) sein. In dem letzteren Fall umfasst der dem Signalverarbeitungsparameter zugeordnete Wert selbst wiederum mehrere Einzelwerte. Als "Anpassung des Hörinstruments" wird konkret die Anpassung der Signalverarbeitungsparameter, d.h. die Belegung mindestens eines der Signalparameter mit einem von dem bisherigen Wert verschiedenen neuen Wert bezeichnet.

Das Hörsystem umfasst das Hörinstrument sowie eine Anpassungseinheit, die das Verfahren zur Anpassung des Hörinstruments durchführt. Bei der Anpassungseinheit kann es sich im Rahmen der Erfindung um ein elektronisches Bauteil, z.B. einen ASIC, handeln, in dem die Funktionalität zur Durchführung des Verfahrens schaltungstechnisch (hard-wired) realisiert ist. Vorzugsweise ist die Anpassungseinheit aber durch eine Software-Einheit (also ein Computerprogramm) gebildet. Die Anpassungseinheit kann in beiden Ausführungsarten wahlweise in dem Hörinstrument oder in einem davon losgelösten Peripheriegerät, z.B. in einer Fernbedienung oder in einem Programmiergerät, integriert bzw. implementiert sein. Vorzugsweise ist die Anpassungseinheit in Form einer dem Hörinstrument zugeordneten und mit dem Hörinstrument interagierenden App ausgebildet, wobei die App bestimmungsgemäß auf einem Smartphone oder anderen Mobilgerät des Nutzers installiert wird. Das Smartphone bzw. Mobilgerät ist in diesem Fall regelmäßig selbst kein Teil des Hörsystems, sondern wird von diesem nur als externe Ressource genutzt.

In einem ersten Schritt des Verfahrens wird einem Nutzer des Hörinstruments mittels eines ersten Klassifikators, der insbesondere ein Teil der vorstehend erwähnten Anpassungseinheit ist, eine Mehrzahl von Problembeschreibungen zur Auswahl angeboten. Die Ausgabe der Problembeschreibungen an den Nutzer erfolgt dabei beispielsweise in Textform, z.B. über einen Bildschirm des Smartphones des Nutzers, oder akustisch mittels automatisch generierter gesprochener Sprache.

Wenn der Nutzer eine der angebotenen Problembeschreibungen auswählt, z.B. durch Antippen einer entsprechenden Schaltfläche auf dem Display seines Smartphones, wird in einem zweiten Schritt des Verfahrens anhand der von dem Nutzer getroffenen Auswahl mittels eines zweiten Klassifikators, der ebenfalls insbesondere ein Teil der vorstehend erwähnten Anpassungseinheit ist, zumindest ein (erster) Lösungsvorschlag für geänderte Werte der Signalverarbeitungsparameter ermittelt. Die Formulierung "geänderte Werte der Signalverarbeitungsparameter" ist allgemein zu verstehen und umfasst auch Lösungsvorschläge, durch die nur für einen Wert eines einzelnen Signalverarbeitungsparameters eine Änderung vorgeschlagen wird. Der Lösungsvorschlag definiert also eine Änderung von mindestens einem der Signalverarbeitungsparameter gegenüber den bestehenden Parametereinstellungen. Der Lösungsvorschlag enthält beispielsweise mindestens einen von der aktuellen Parametereinstellung im Hörinstrument abweichenden (absoluten) Wert für mindestens einen der Signalverarbeitungsparameter oder eine relative Angabe zur Änderung des bestehenden Wertes mindestens eines Signalverarbeitungsparameters (z.B. die Erhöhung eines bestimmten Verstärkungsfaktors um 3dB).

Durch diesen zweistufigen Prozess wird der Nutzer effektiv bei der Erkennung und präzisen Formulierung des durch die Anpassung des Hörinstruments zu lösenden Problems unterstützt, wodurch auch die zielgerichtete Lösung des Problems und damit eine optimierte Anpassung des Hörinstruments wesentlich vereinfacht wird.

Die Anpassungseinheit des Hörsystems ist schaltungs- oder programmtechnisch zur Durchführung des erfindungsgemäßen Verfahrens eingerichtet. Die Anpassungseinheit umfasst hierzu den ersten Klassifikator und den zweiten Klassifikator. Mit den nachstehend beschriebenen Ausführungsformen des Verfahrens korrespondieren entsprechende Ausführungsformen des Hörsystems. Wirkungen und Vorteile der einzelnen Verfahrensvarianten sind auf die entsprechenden Varianten des Hörsystems übertragbar und umgekehrt.

Die angebotenen Problembeschreibungen werden durch den (nachfolgend auch als "Problem-Klassifikator" bezeichneten) ersten Klassifikator anhand von Umgebungsdaten, die die akustische Umgebung des Hörinstruments charakterisieren, und/oder anhand von Nutzerdaten, die den Nutzer charakterisieren, vorausgewählt. Der erste Klassifikator wählt hierbei insbesondere eine kleine Anzahl von - nach Maßgabe der Umgebungs- und Nutzerdaten relevanten - Problembeschreibungen aus einer wesentlich größeren Anzahl vorgegebener Problembeschreibungen aus, z.B. 5 aus 60 hinterlegten Problembeschreibungen. Zusätzlich oder alternativ nimmt der Problem-Klassifikator die Vorauswahl durch eine Sortierung der hinterlegten Problembeschreibungen nach Relevanz vor. Durch beide Maßnahmen werden wenige mutmaßlich relevante Problembeschreibungen für den Nutzer aus der Vielzahl möglicher Probleme hervorgehoben.

In einer vorteilhaften Fortbildung des Verfahrens nutzt auch der (nachfolgend auch als "Lösungs-Klassifikator" bezeichnete) zweite Klassifikator Umgebungsdaten, die die akustische Umgebung des Hörinstruments charakterisieren, und/oder Nutzerdaten, die den Nutzer charakterisieren, um den Lösungsvorschlag zu ermitteln. Durch die Berücksichtigung von Umgebungs- und/oder Nutzerdaten wird eine zielgerichtete Auffindung geeigneter Lösungsvorschläge unterstützt. Das Risiko von Fehlversuchen bei der Anpassung des Hörinstruments wird somit reduziert.

Als Umgebungsdaten ziehen der ersten Klassifikator und/oder der zweite Klassifikator im Zuge des Verfahrens insbesondere

- einen durchschnittlichen (Schall-)Pegel des aufgenommenen Audiosignals, insbesondere einen über eine vorgegebene Zeitspanne (z.B. über die letzten 10 Minuten) gebildeten Mittelwert des Pegels,
- ein durchschnittliches Signal-Rausch-Verhältnis, insbesondere einen über eine vorgegebene Zeitspanne (z.B. über die letzten 10 Minuten) gebildeten Mittelwert des Signal-Rausch-Verhältnisses,
- eine dem Audiosignal zugeordnete Geräuschklasse (z.B. "Sprache", "Musik", "Sprache mit Hintergrundgeräusch", "Kraftfahrzeug", etc.) und/oder
- Daten über Windaktivität (d.h. Daten, die angeben, ob und ggf. wie stark das aufgenommene Audiosignal durch Windgeräusch gestört ist),

heran. Zusätzlich oder alternativ können in Rahmen der Erfindung weitere für die akustische Umgebung des Hörinstruments charakteristische Umgebungsdaten von dem ersten und/oder zweiten Klassifikator berücksichtigt werden.

Folgende Nutzerdaten werden vorzugsweise durch den ersten Klassifikator und/oder durch den zweiten Klassifikator (einzeln oder in beliebiger Kombination) berücksichtigt:

- Daten, die ein Hörvermögen des Nutzers charakterisieren (z.B. Audiogrammdaten),
- Daten, die die akustische Kopplung des Hörinstruments mit dem Nutzer charakterisieren (diese Daten geben insbesondere an, ob das Hörinstrument eine für offene Versorgung oder eine geschlossene Versorgung ausgelegt ist, ob also das Hörinstrument die unmittelbare Wahrnehmung des Umgebungsschalls durch das Gehör des Nutzers ermöglicht oder ob es den Gehörgang akustisch abdichtet),
- Daten bezüglich des Typs des Hörinstruments,
- das Alter des Nutzers,
- das Geschlecht des Nutzes,
- einen Aktivitätsgrad des Nutzers (d.h. ein Maß für die physische und/oder soziale Aktivität des Nutzers, wobei die physische Aktivität beispielsweise mittels eines innerhalb oder außerhalb des Hörinstruments am Körper des Nutzers getragenen Bewegungssensors analysiert wird, und wobei die soziale Aktivität beispielsweise durch Analyse der Sprachaktivität, z.B. der Häufigkeit von Sprechphasen, des Nutzers analysiert wird),
- den Aufenthaltsort des Nutzers (z.B. durch Angabe des Landes, in dem der Nutzer wohnt oder sich aufhält),

- die Sprache des Nutzers und/oder
- eine Angabe zu der Beratungsbedürftigkeit des Nutzers (z.B. auf einer Skala vom 1 bis 5).

Als "Nutzerdaten" werden somit insbesondere auch Daten bezeichnet, die das Hörinstrument des Nutzers oder dessen Interaktion mit dem Hörinstrument charakterisieren, da solche Daten für den Nutzer spezifisch sind und somit auch den Nutzer charakterisieren.

Der erste Klassifikator und der zweite Klassifikator ziehen dabei in zweckmäßiger Ausgestaltung der Erfindung die gleiche Kombination aus Umgebungs- und Nutzerdaten heran. Alternativ ist im Rahmen der Erfindung aber auch denkbar, dass der erste Klassifikator und der zweite Klassifikator auf unterschiedliche Umgebungsdaten und/oder Nutzerdaten zugreifen.

Erfindungsgemäß ist der erste Klassifikator als selbst-lernendes System ausgebildet, das seine Arbeitsweise durch Analyse der Interaktion mit dem Nutzer selbsttätig optimiert. Hierzu werden im Zuge des Verfahrens durch den ersten Klassifikator Auswahlhäufigkeiten erfasst, die angeben, wie häufig jede der Problembeschreibungen von dem Nutzer ausgewählt wird. Die erfassten Auswahlhäufigkeiten werden dabei durch den ersten Klassifikator bei der Vorauswahl der angebotenen Problembeschreibungen und/oder deren Reihenfolge berücksichtigt. Insbesondere werden häufig ausgewählte Problembeschreibungen mit höherer Priorität dem Nutzer angeboten als Problembeschreibungen, die weniger häufig ausgewählt werden.

Vorzugsweise wird der Lösungsvorschlag getestet, indem die dem Lösungsvorschlag entsprechenden geänderten Werte der Signalverarbeitungsparameter - optional nach einer Bestätigung durch den Nutzer - in dem Hörinstrument eingestellt werden, so dass das Hörinstrument mit den geänderten Signalverarbeitungsparametern betrieben wird. Der Nutzer wird dabei zu einer Bewertung des Lösungsvorschlags aufgefordert. Im Rahmen der Bewertung wird dem Nutzer insbesondere die Möglichkeit gegeben, die in dem Hörinstrument umgesetzten Parameteranpassungen anzunehmen oder abzulehnen. Je nach dem Inhalt der Bewertung werden entsprechend die dem Lösungsvorschlag entsprechenden geänderten Werte der Signalverarbeitungsparameter in dem Hörinstrument beibehalten (bei positiver Bewertung) oder verworfen (bei negativer Bewertung). Im letztgenannten Fall wird die Änderung insbesondere wieder rückgängig gemacht. Es werden also die vor der Änderung geltenden Parameterwerte wieder eingestellt.

In zweckmäßiger Ausführung der Erfindung werden mittels des zweiten Klassifikators auf die vorstehend beschriebene Weise - gleichzeitig oder sukzessive nacheinander - mehrere verschiedene Lösungsvorschläge ermittelt. Im Fall einer negativen Bewertung eines zunächst getesteten Lösungsvorschlags wird ein von dem zweiten Klassifikator ermittelte alternativer Lösungsvorschlag getestet. Hierzu werden die diesem alternativen Lösungsvorschlag entsprechenden geänderten Werte der Signalverarbeitungsparameter in dem Hörinstrument eingestellt.

Dieses Verfahren wird vorzugsweise iterativ mehrfach durchgeführt: Der Nutzer wird aufgefordert, den alternativen Lösungsvorschlag zu bewerten, wobei wiederum je nach dem Inhalt der Bewertung die entsprechenden Werte der Signalverarbeitungsparameter in dem Hörinstrument beibehalten oder verworfen werden. Die Iteration wird insbesondere beendet, wenn der Nutzer einen Lösungsvorschlag positiv bewertet oder das Verfahren abbricht.

In einer vorteilhaften Ausführung der Erfindung ist auch der zweite Klassifikator als selbstlernendes System ausgebildet. Hierzu werden durch den zweiten Klassifikator frühere Bewertungen bei der Ermittlung des oder jedes Lösungsvorschlags berücksichtigt. Insbesondere werden Lösungsvorschläge, die bereits früher von dem Nutzer negativ bewertet wurden, durch den zweiten Klassifikator mit niedrigerer Priorität vorgeschlagen als Lösungsvorschläge, die vormals positiv oder nicht bewertet wurden.

In einer zweckmäßigen Ausführung der Erfindung wird die von dem Nutzer getroffene Auswahl einer der angebotenen Problembeschreibungen zusammen mit dem oder jedem Lösungsvorschlag und gegebenenfalls der zugehörigen Bewertung des Nutzers als Datensatz einer Wissensdatenbank zugeführt, in der entsprechende Datensätze einer Vielzahl von Nutzern enthalten sind. Die Wissensdatenbank ist zweckmäßigerweise außerhalb des Hörinstruments und der Anpassungseinheit implementiert und insbesondere mit der Anpassungseinheit über das Internet verbunden oder verbindbar. Vorzugsweise ist die Wissensdatenbank in einer sogenannten Cloud-Datenbank implementiert. Die in der Wissensdatenbank enthaltenden Datensätze werden dabei genutzt, um geeignete Voreinstellungen für den ersten Klassifikator und/oder den zweiten Klassifikator zu bestimmen.

Vorzugsweise sind der erste Klassifikator und/oder der zweite Klassifikator als künstliches neuronales Netzwerk, insbesondere als vollvernetztes, mehrschichtiges Feedforward-Netzwerk, ausgebildet. Der erste Klassifikator und/oder der zweite Klassifikator werden hierbei insbesondere mit den in der Wissensdatenbank enthaltenen Datensätzen trainiert.

In einer zweckmäßigen Alternative sind der erste Klassifikator und/oder der zweite Klassifikator als Entscheidungsbaum ausgebildet.

Bei dem Hörinstrument des Hörsystems handelt es sich in dem bevorzugten Anwendungsfall um ein zur Versorgung von Minderhörenden ausgebildetes Hörgerät. Grundsätzlich ist die Erfindung aber auch auf ein Hörsystem mit einem "Personal Sound Amplification Device" anwendbar. Das Hörinstrument liegt insbesondere in einer der eingangs genannten Bauformen vor, insbesondere als BTE-, RIC-, ITE- oder CIC-Gerät vor. Bei dem Hörinstrument kann es sich ferner auch um eine implantierbare oder vibrotaktile Hörhilfe handeln.

Nachfolgend werden Ausführungsbeispiele der Erfindung anhand einer Zeichnung näher beschrieben. Darin zeigen:

Fig. 1    in schematischer Darstellung ein Hörsystem mit einem Hörinstrument, in dem ein mittels eines Eingangswandlers aufgenommenes Audiosignal eines Umgebungsschalls nach Maßgabe einer Vielzahl von Signalverarbeitungsparametern modifiziert wird, sowie mit einer Anpassungseinheit zur Anpassung des Hörinstruments, wobei die Anpassungseinheit als auf einem Smartphone installierte App ausgebildet ist,

Fig. 2    anhand eines schematischen Blockschaltbilds des Hörsystems den Ablauf eines mittels dieses Systems durchgeführten Verfahrens zur Anpassung des Hörinstruments,

Fig. 3    in einem schematischen Blockschaltbild einen beispielhaften Aufbau eines hier als zweistufiger, dynamischer Entscheidungsbaum ausgebildeten ersten Klassifikators (Problem-Klassifikators) der Anpassungseinheit,

Fig. 4    in einem Abhängigkeitsschema eine beispielhafte Entscheidungsbaumstruktur des ersten Klassifikators gemäß Fig. 3,

Fig. 5    in einem schematischen Blockschaltbild einen ein künstliches neuronales Netzwerk umfassenden zweiten Klassifikator (Lösungs-Klassifikator) der Anpassungseinheit, und

Fig. 6    in Darstellung gemäß Fig. 2 das Hörsystem mit einer alternativen Ausführung der Anpassungseinheit.

Einander entsprechende Teile, Größen und Strukturen sind in allen Figuren stets mit gleichen Bezugszeichen versehen.

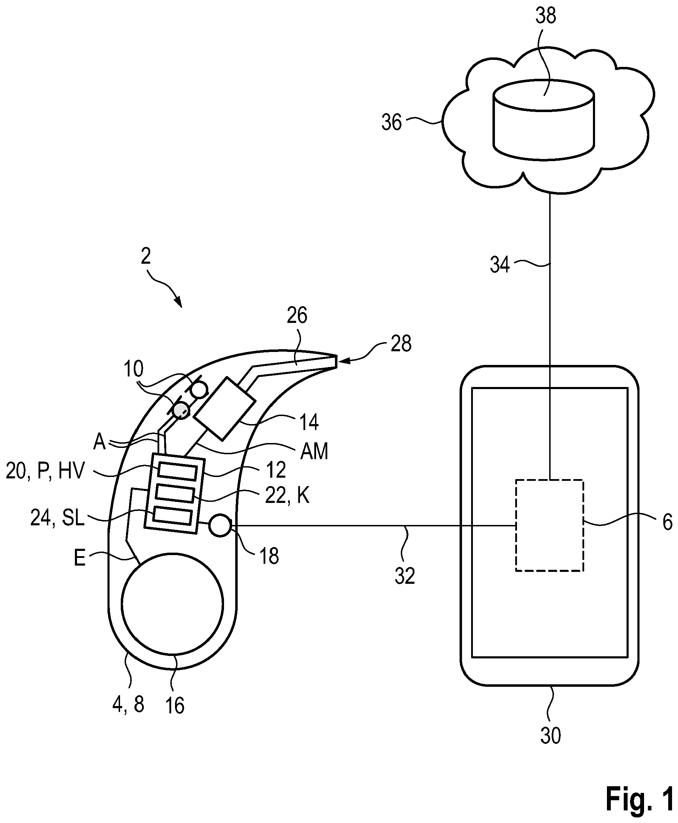

**In** Fig. 1 ist in grob schematischer Darstellung ein Hörsystem 2 dargestellt, das ein Hörinstrument 4 und eine Anpassungseinheit 6 umfasst. Bei dem Hörinstrument 4 handelt es sich in dem dargestellten Ausführungsbeispiel um ein BTE-Hörgerät.

Das Hörinstrument 4 umfasst ein hinter dem Ohr eines minderhörenden Nutzers zu tragendes Gehäuse 8, in welchem als Hauptkomponenten zwei Eingangswandler 10 in Form von Mikrofonen, eine Signalverarbeitungseinheit 12 mit einem digitalen Signalprozessor (z.B. in Form eines ASIC) und/oder einem Mikrocontroller, ein Ausgangswandler 14 in Form eines Hörers sowie eine Batterie 16 angeordnet sind. Das Hörinstrument 2 umfasst weiterhin einen Funk-Transceiver 18 (RF-Transceiver) zum drahtlosen Austausch von Daten auf Basis des Bluetooth-Standards.

Im Betrieb des Hörinstruments 4 wird mittels der Eingangswandler 10 ein Umgebungsschall aus der Umgebung des Hörinstruments 4 aufgenommen und als Audiosignal A (d.h. als ein die Schallinformation tragendes elektrisches Signal) an die Signalverarbeitungseinheit 12 ausgegeben. Durch die Signalverarbeitungseinheit 12 wird das Audiosignal A verarbeitet. Die Signalverarbeitungseinheit 12 umfasst hierzu eine Vielzahl von Signalverarbeitungsfunktionen, unter anderem einen Verstärker, durch den das Audiosignal A frequenzabhängig verstärkt wird, um die Hörschädigung des Nutzers zu kompensieren. Die Signalverarbeitungseinheit 12 wird durch eine Vielzahl von Signalverarbeitungsparametern P parametrisiert. Aktuelle (und somit im Betrieb des Hörinstruments 4 zum Einsatz kommende) Werte dieser Signalverarbeitungsparameter P sind in einem der Signalverarbeitungseinheit 12 zugeordneten (insbesondere darin integrierten) Speicher 20 hinterlegt. In dem Speicher 20 sind weiterhin Nutzerdaten, die den Nutzer des Hörinstruments charakterisieren, hinterlegt, insbesondere Hörverlustdaten HV, die den Hörverlust des Nutzers charakterisieren.

Die Signalverarbeitungseinheit 12 umfasst des Weiteren einen Geräusch-Klassifikator 22, der das Audiosignal A fortlaufend analysiert und die darin enthaltene Schallinformation auf Basis dieser Analyse einer von mehreren vorgegeben Geräuschklassen K zuordnet. Konkret wird der Umgebungsschall beispielsweise einer der Geräuschklassen "Musik / Music", "Sprache in Ruhe / Speech in Quiet" oder "Sprache mit Hintergrundgeräusch / Speech in Noise", "Störgeräusch / Noise", "Ruhe / Quiet" oder "Kraftfahrzeug / Car" zugeordnet. In Abhängigkeit von der Geräuschklasse K wird die Signalverarbeitungseinheit 12 in unterschiedlichen Hörprogrammen (und somit mit unterschiedlichen Werten für die Signalverarbeitungsparameter P) betrieben. In einer einfachen und zweckmäßigen Ausführung trifft der Geräusch-Klassifikator 22 eine eindeutige Auswahl zwischen den zur Verfügung stehenden Geräuschklassen, so dass er den Umgebungsschall zu jedem Zeitpunkt stets nur einer einzigen Geräuschklasse zuordnet. In einer verfeinerten Ausführung gibt der Geräusch-Klassifikator 22 abweichend hiervon für jede der zu Verfügung stehenden Geräuschklassen einen Wahrscheinlichkeits- oder Ähnlichkeitswert aus, so dass auch Mischsituationen der Geräuschklassen und kontinuierliche Übergänge zwischen Geräuschklassen erfasst werden.

Ferner umfasst die Signalverarbeitungseinheit 12 einen Pegelmesser 24, der fortlaufend den durchschnittlichen Schallpegel SL des aufgenommenen Umgebungsschalls über die letzten 10 Minuten misst.

Die Signalverarbeitungseinheit 12 gibt ein aus dieser Signalverarbeitung resultierendes modifiziertes Audiosignal AM an den Ausgangswandler 14 aus. Dieser wandelt das modifizierte Audiosignal AM wiederum in einen Schall um. Dieser (gegenüber dem aufgenommenen Umgebungsschall modifizierte) Schall wird von dem Ausgangswandler 14 zunächst durch einen Schallkanal 26 an eine Spitze 28 des Gehäuses 8, und von dort durch einen (nicht explizit dargestellten) Schallschlauch zu einem in das Ohr des Nutzers einsetzbaren oder eingesetzten Ohrstück geleitet.

Die Signalverarbeitungseinheit 12 wird aus der Batterie 16 mit elektrischer Energie E versorgt.

Die Anpassungseinheit 6 ist in dem dargestellten Ausführungsbeispiel als Software in Form einer App realisiert, die auf einem Smartphone 30 des Nutzers installiert ist. Das Smartphone 30 ist selbst kein Bestandteil des Hörsystems 2 und wird von diesem nur als Ressource genutzt. Konkret nutzt die Anpassungseinheit 6 Speicherplatz und Rechenleistung des Smartphones 30 zur Durchführung eines nachfolgend näher beschriebenen Verfahrens zur Anpassung des Hörinstruments 4. Weiterhin nutzt die Anpassungseinheit 6 einen (nicht näher dargestellten) Bluetooth-Transceiver des Smartphones 30 zur drahtlosen Kommunikation, d.h. zum Datenaustausch mit dem Hörinstrument 4) über eine in Fig. 1 angedeutete Bluetooth-Verbindung 32.

Über eine weitere drahtlose oder drahtgebundene Datenkommunikationsverbindung 34, beispielsweise auf Basis des IEEE 802.11-Standards (WLAN) oder eines Mobilfunkstandards, z.B. LTE, ist die Anpassungseinheit 6 weiterhin mit einer im Internet angeordneten Cloud 36 verbunden, in der eine Wissensdatenbank 38 installiert ist. Für den Datenaustausch mit der Wissensdatenbank 38 greift die Anpassungseinheit 6 auf eine (ebenfalls nicht explizit dargestellte) WLAN- oder Mobilfunk-Schnittstelle des Smartphones 30 zu.

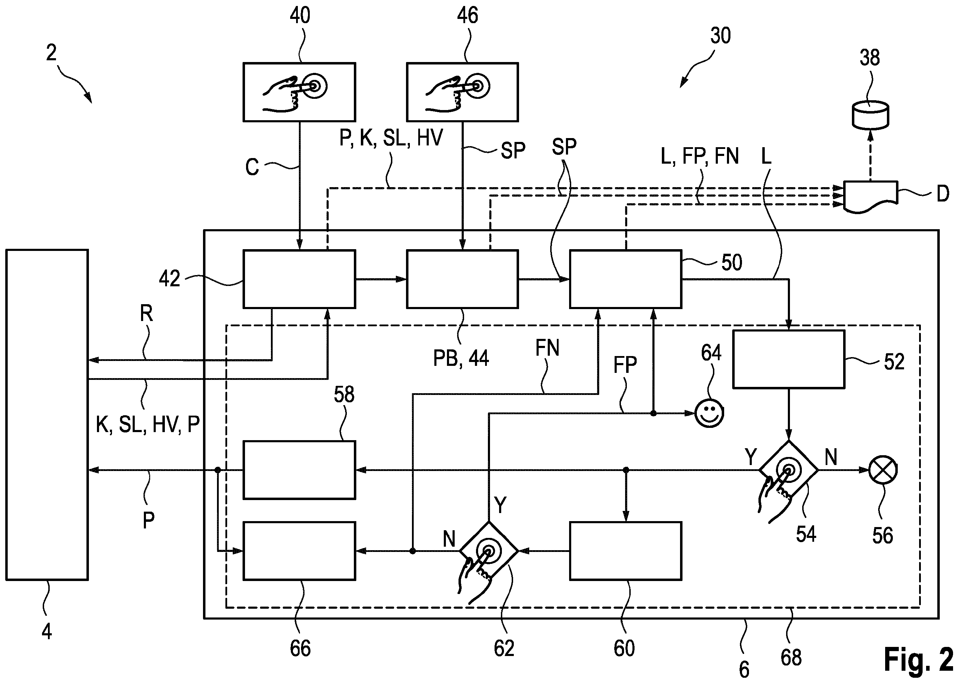

Der Aufbau der Anpassungseinheit 6 und ihre Zusammenwirken mit dem Hörinstrument 4 und dem Nutzer sind in Fig. 2 näher dargestellt.

Die Anpassungseinheit 6 wird durch den Nutzer des Hörinstruments 4 gestartet, wenn dieser die durch das Hörinstrument 4 vorgenommene Signalverarbeitung in einer aktuellen Hörsituation zu verbessern wünscht. Der Nutzer betätigt hierzu eine der Anpassungseinheit 6 zugeordnete Schaltfläche 40 (Icon) auf dem Display des Smartphones 30, z.B. indem er diese Schaltfläche 40 mit dem Finger antippt.

Hierdurch wird ein Startbefehl C erzeugt, der einen Datenabrufblock 42 des Anpassungsmoduls 6 aktiviert. Der Datenabrufblock 42 ruft hierauf über die Bluetooth-Verbindung 32 mit einer Anforderung R (d.h. einem Abrufbefehl) aus dem Hörinstrument 4 akustische Umgebungsdaten, nämlich die aktuellen Wert der Geräuschklasse K und des durchschnittlichen Schallpegels SL, sowie Nutzerdaten, nämlich die im Speicher 20 hinterlegten Hörverlustdaten HV, ab. Der Datenabrufblock 42 ruft weiterhin die aktuellen Werte der Signalverarbeitungsparameter P aus dem Speicher 20 des Hörinstruments 4 ab.

Als Hörverlustdaten HV können frequenzaufgelöste Audiogrammdaten abgerufen und verarbeitet werden. Alternativ ruft der Datenabrufblock 42 aus dem Hörinstrument 4 eine vereinfachte Charakterisierung der Hörschädigung des Nutzers ab, z.B. in Form einer Einteilung der Hörschädigung auf einer dreistufigen Skala ("schwache Hörschädigung", "mittlere Hörschädigung", "starke Hörschädigung"). Wiederum alternativ ruft der Datenabrufblock 42 aus dem Hörinstrument 4 differenzierte Hörverlustdaten HV wie z.B. Audiogrammdaten ab, wobei diese Hörverlustdaten HV dann durch die Anpassungseinheit 6 für die weitere Verarbeitung, z.B. auf eine Skala der oben beschriebenen Art, vereinfacht und in dieser vereinfachten Form weiterverarbeitet werden.

Die aus dem Hörinstrument 4 abgerufenen Umgebungsdaten und Nutzerdaten leitet der Datenabrufblock 42 einem als Problem-Klassifikator 44 bezeichneten Block zu. Der Problem-Klassifikator 44 wählt anhand dieser Daten, d.h. anhand

- der Geräuschklasse K,
- des durchschnittlichen Schallpegels SL sowie
- der Hörverlustdaten HV des Nutzers

auf nachstehend näher beschriebene Weise eine kleine Anzahl von Problembeschreibungen PB (also Beschreibungen von potentiell zu lösenden Problemen bezüglich der Signalverarbeitung des Hörinstruments) aus einer wesentlich größeren Anzahl von hinterlegten Problembeschreibungen PB aus und bietet diese vorausgewählten Problemschreibungen PB dem Nutzer durch Anzeige auf dem Display des Smartphones 30 zur Auswahl an.

Der Nutzer wählt hierauf durch Betätigung einer auf dem Display des Smartphones 30 eingeblendeten Schaltfläche 46 (wiederum z.B. durch Antippen mit dem Finger) eine der angezeigten Problembeschreibungen PB aus. Eine entsprechende Auswahl SP (und damit das von dem Nutzer gemäß der Problembeschreibung ausgewählte zu lösende Problem) wird von dem Problem-Klassifikator 44 einem als Lösungs-Klassifikator 50 bezeichneten Block zugeleitet. Zudem wird die Auswahl SP in dem Problem-Klassifikator 44 selbst auf nachstehend näher beschriebene Weise ausgewertet.

Der Lösungs-Klassifikator 50 greift auch auf die aus dem Hörinstrument 4 abgerufenen Umgebungs- und Nutzerdaten zu. Anhand dieser Daten, nämlich

- anhand der von dem Nutzer getroffenen Auswahl SP des zu lösenden Problems,
- der Geräuschklasse K,
- des durchschnittlichen Schallpegels SL, sowie
- der Hörverlustdaten HV des Nutzers,

ermittelt der Lösungs-Klassifikator 50 einen ersten Lösungsvorschlag L für eine Verbesserung der Signalverarbeitung des Hörinstruments 4. Der Lösungsvorschlag L umfasst für mindestens einen Signalverarbeitungsparameter P des Hörinstruments 4 eine vorgeschlagene Änderung, d.h. eine Erhöhung oder Erniedrigung des Wertes des entsprechenden Signalverarbeitungsparameters P.

In einem Block 52 teilt die Anpassungseinheit 6 dem Nutzer den Lösungsvorschlag L durch Einblendung einer entsprechenden Lösungsbeschreibung auf dem Display des Smartphone 30 mit und fordert den Nutzer auf, die Umsetzung des Lösungsvorschlags L auf dem Hörinstrument 4 zu bestätigen oder abzulehnen.

Die Bestätigung oder Ablehnung nimmt der Nutzer durch Betätigung einer auf dem Display des Smartphones 30 angezeigten Schaltfläche 54 vor. Wenn der Nutzer die Umsetzung des Lösungsvorschlags L ablehnt (N), bricht die Anpassungseinheit 6 die Verfahrensdurchführung in einem Block 56 ab.

Wenn der Nutzer dagegen die Umsetzung des Lösungsvorschlags L bestätigt (Y), berechnet die Anpassungseinheit 6 in einem Block 58 dem Lösungsverschlag L entsprechend geänderte Werte für die Signalverarbeitungsparameter P. Durch den Block 58 werden diese geänderten Werte über die Bluetooth-Verbindung 32 an das Hörinstrument 4 gesendet. In dem Hörinstrument 4 werden die geänderten Werte den Signalverarbeitungsparametern P zugewiesen, so dass das Hörinstrument 4 die Signalverarbeitung nun auf Basis dieser geänderten Werte durchführt.

Gleichzeitig mit der Umsetzung des Lösungsvorschlags L in dem Hörinstrument 4 fordert die Anpassungseinheit 6 den Nutzer in einem Block 60 durch Anzeige einer entsprechenden Nachricht auf dem Display des Smartphones 30 zu einer Bewertung des Lösungsvorschlag L auf. Im Zuge der Bewertung entscheidet der Nutzer durch Betätigung einer Schaltfläche 62, ob die geänderten Einstellungen der Signalverarbeitungsparameter P auf dem Hörinstrument 4 beibehalten oder verworfen werden sollen.

Wenn der Nutzer entscheidet, dass die geänderten Einstellungen der Signalverarbeitungsparameter P auf dem Hörinstrument 4 beibehalten werden sollen (Y), wird als Bewertung eine positive Rückmeldung FP erzeugt und dem Lösungs-Klassifikator 50 zugeführt. Danach beendet die Anpassungseinheit 6 die Verfahrensdurchführung in einem Block 64.

Wenn der Nutzer entscheidet, dass die geänderten Einstellungen der Signalverarbeitungsparameter P auf dem Hörinstrument 4 verworfen werden sollen (N), wird als Bewertung eine negative Rückmeldung FN erzeugt und dem Lösungs-Klassifikator 50 zugeführt. Zudem wird ein Block 66 aktiviert, der dem Hörinstrument 4 die ursprünglichen Werte der Signalverarbeitungsparameter P wieder zuführt und somit die Änderung der Signalverarbeitungsparameter P rückgängig macht.

Aufgrund der negativen Rückmeldung FN ermittelt der Lösungs-Klassifikator 50 einen alternativen, zweiten Lösungsvorschlag L. Mit dem zweiten Lösungsvorschlag L (und gegebenenfalls weiteren Lösungsvorschlägen L) wird der vorstehend beschriebene Verfahrensablauf (Blöcke 52 bis 66) ein- oder mehrfach wiederholt, bis der Nutzer einen alternativen Lösungsvorschlag L positiv bewertet oder die Verfahrensdurchführung abbricht.

Bei jeder positiven oder negativen Rückmeldung FP bzw. FN eines Lösungsvorschlags L durch den Nutzer fasst die Anpassungseinheit 6 die ursprünglichen Werte der Signalverarbeitungsparameter P, die erhobenen Umgebungs- und Nutzerdaten (d.h. die Geräuschklasse K, den durchschnittlichen Schallpegel SL, sowie die Hörverlustdaten HV), die Auswahl SP, den jeweiligen Lösungsvorschlag L zusammen mit der zugehörigen Bewertung (d.h. der positiven oder negativen Rückmeldung FP bzw. FN) in einem Datensatz D zusammen und sendet diesen Datensatz D an die Wissensdatenbank 38.

Die Blöcke 42, 44, 50, 52, 56, 58, 60, 64, 66 und die Schaltflächen 40, 46, 54 und 62 sind vorzugweise als Softwareroutinen (z.B. in Form von Funktionen, Objekten oder Komponenten) realisiert. Das Ensemble der Blöcke 52, 56, 58, 60, 64, 66 und die Schaltflächen 54 und 62 wird zusammenfassend auch als Auswertungsmodul 68 bezeichnet.

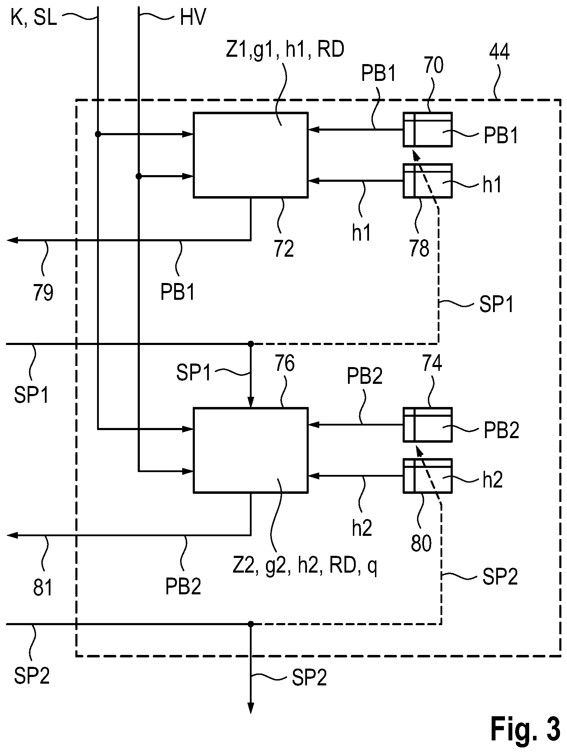

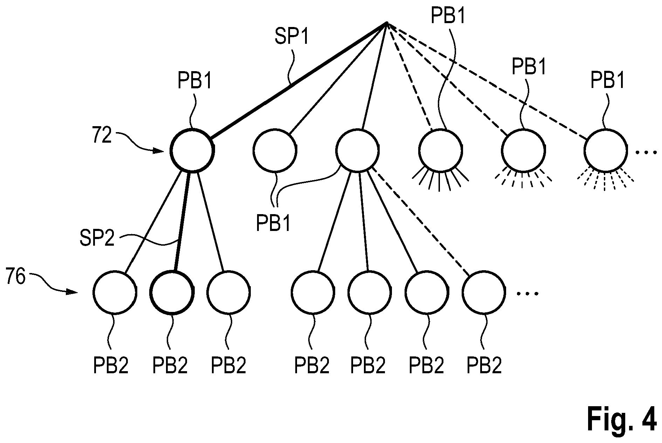

Ein Ausführungsbeispiel für den Aufbau des Problem-Klassifikators 44 ist in Fig. 3 näher dargestellt. In diesem Beispiel ist der Problem-Klassifikator 44 als zweistufiger, dynamischer Entscheidungsbaum ausgestaltet, wie er als Schema in Fig. 4 dargestellt ist.

In einer Liste 70, die einer ersten Stufe 72 des Problem-Klassifikators 44 zugeordnet ist, sind dabei eine Mehrzahl von Problembeschreibungen PB1 zu übergeordneten Problembereichen hinterlegt.

In einer Liste 74, die einer zweiten Stufe 76 des Problem-Klassifikators 44 zugeordnet ist, ist zumindest für eine der Problembeschreibungen PB1 der ersten Stufe 72 (in der Regel aber für die überwiegende Anzahl der Problembeschreibungen PB1) jeweils eine Mehrzahl von spezifischeren Problembeschreibungen PB2 hinterlegt.

Beispielsweise enthält die Liste 70 der ersten Stufe 72 die übergeordnete Problembeschreibung PB1 "Problem mit der eigenen Stimme". Zugeordnet zu dieser allgemeinen Problembeschreibung PB1 enthält die Liste 74 der zweiten Stufe 76 beispielsweise die spezifischen Problembeschreibungen PB2 "eigene Stimme klingt zu laut", "eigene Stimme klingt zu leise", "eigene Stimme klingt nasal".

Die dem Problem-Klassifikator 44 zugrundeliegende Baumstruktur ist dabei insofern dynamisch als der Problem-Klassifikator 44 die angezeigten Problembeschreibungen PB1 und PB2 in Abhängigkeit der Umgebungs- und Nutzerdaten, d.h. anhand der Geräuschklasse K, des durchschnittlichen Schallpegels SL sowie der Hörverlustdaten HV hinsichtlich Anzahl und Reihenfolge vorauswählt.

Zusätzlich zu den vorstehend genannten Daten berücksichtigt der Problem-Klassifikator 44 bei dieser Vorauswahl auch relative Häufigkeiten h1 und h2, mit der die einzelnen Problemschreibungen PB1 bzw. PB2 zuvor ausgewählt wurden. Entsprechende Werte dieser Häufigkeiten h1 und h2 sind für die Problembeschreibungen PB1 der ersten Stufe 72 in einer Liste 78, und für die Problembeschreibungen PB2 der zweiten Stufe 76 in einer Liste 80 hinterlegt. Die Inhalte der Listen 70, 74, 78 und 80 können alternativ auch in anderer Weise, z.B. in einer oder zwei Listen, zusammengefasst sein.

Die in der ersten Stufe 72 bzw. zweiten Stufe 76 anzuzeigenden Problembeschreibungen PB1 und PB2 werden von dem Problem-Klassifikator 44 nach einem gewichteten Pseudo-Zufallsprinzip vorausgewählt.

Hierzu ordnet der Problem-Klassifikator 44 in der ersten Stufe 72 allen Problembeschreibung PB1 aus der Liste 70 eine Relevanzzahl Z1 zu, die er beispielsweise nach der Formel

$$Z1 = g1 * h1 * RD$$

bestimmt. Hierbei stehen

- $g1 = g1(K, SP, HV)$ für eine von der Geräuschklasse K, dem durchschnittlichen Schallpegel SL sowie den Hörverlustdaten HV abhängige Gewichtszahl, und

- RD für eine Pseudo-Zufallszahl.

Die Abhängigkeiten der Gewichtszahl g1 von der Geräuschklasse K, dem durchschnittlichen Schallpegel SL sowie den Hörverlustdaten HV sind für jede der Problembeschreibungen PB1 aus der Liste 70 (z.B. empirisch) definiert und beispielsweise durch eine Kennwerttabelle oder eine mathematische Funktion vorgegeben. Die Gewichtszahl g1 ist dabei vorzugsweise derart definiert, dass ihr Wert von den genannten Umgebungs- und Nutzerdaten umso größer ist, je relevanter die Problembeschreibung PB1 aus audiologischer Sicht für den jeweiligen Fall ist. Vorzugsweise wird die Gewichtszahl g1 dabei aber stets zwischen 0 und 1 gewählt ($g1 = [0,1]$).

Die Pseudo-Zufallszahl RD wird für jede Relevanzzahl Z1 neu bestimmt.

In der ersten Stufe 72 sortiert der Problem-Klassifikator 44 die Problembeschreibungen PB1 nach der Größe der zugeordneten Relevanzzahl Z1 und zeigt eine bestimmte Anzahl von Problembeschreibungen PB1 in der Reihenfolge ihrer jeweils zugeordneten Relevanzzahlen Z1 an. In dem Schema gemäß Fig. 3 ist dies durch einen von der ersten Stufe 72 nach links abgehenden Pfeil 79 angedeutet. Insbesondere werden stets die vier Problembeschreibungen PB1 mit den höchsten Relevanzzahlen Z1 angezeigt. Diese vier Problembeschreibungen PB1 sind in dem Schema gemäß Fig. 4 mit durchgezogenen Linien verbunden. Beispielsweise werden auf diese Weise durch die erste Stufe 72 folgende Problembeschreibungen PB1 zur Auswahl angezeigt:

- "Problem mit der eigenen Stimme"

- "Problem beim Verstehen der Sprache Anderer"

- "Problem mit der Klangqualität"

- "Problem mit der Hörgerätebedienung"

Die weiteren Problembeschreibungen PB1 mit kleinerer Relevanzzahl Z1 werden dem Nutzer zunächst nicht angezeigt. Dem Nutzer wird aber vorzugsweise zusätzlich zu den vier angezeigten Problembeschreibungen PB1 das Feld

- "Keines der vorstehend genannten Probleme"

zur Auswahl angezeigt. Wenn der Nutzer dieses Feld auswählt, werden durch die erste Stufe 72 die vier Problembeschreibungen PB1 mit den nächstkleineren Relevanzzahlen Z1 angezeigt. Wenn der Nutzer dagegen eine der vier zunächst angezeigten Problembeschreibungen PB1 (z.B. die erstgenannte Problembeschreibung "Problem mit der eigenen Stimme") auswählt, wird diese Auswahl SP1 der zweiten Stufe 76 zugeleitet.

In der zweiten Stufe 76 werden auf analoge Weise eine Anzahl von spezifischen Problembeschreibungen PB2 vorausgewählt, indem die Problembeschreibungen PB2 nach Relevanz bewertet und sortiert werden.

Die zweite Stufe ordnet wiederum jeder Problembeschreibung PB2 eine Relevanzzahl

$$Z2 = q * g2 * h2 * RD$$

bestimmt, wobei

- $g2 = g2(K, SP, HV)$ wiederum eine Gewichtszahl zwischen 0 und 1 ($g2 = [0,1]$),

- RD eine Pseudo-Zufallszahl, und

- $q = q(SP1)$ ein binäre Größe

bezeichnen.

Die Abhängigkeiten der Gewichtszahl g2 von der Geräuschklasse K, dem durchschnittlichen Schallpegel SL sowie den Hörverlustdaten HV sind für jede der Problembeschreibungen PB2 aus der Liste 74 (z.B. empirisch) definiert und beispielsweise wiederum durch eine Kennwerttabelle oder eine mathematische Funktion vorgegeben.

Die von der Auswahl SP1 abhängige binäre Größe $q = q(S1)$ hat den Wert 1 für alle Problembeschreibungen PB2, die der in der ersten Stufe 72 ausgewählten Problembeschreibung PB1 zugeordnet sind. Für alle anderen Problembeschreibungen PB2 hat die binäre Größe q den Wert 0.

In der zweiten Stufe 76 sortiert der Problem-Klassifikator 44 die Problembeschreibungen PB2 wiederum nach der Größe der zugeordneten Relevanzzahl Z2 und zeigt eine bestimmte Anzahl von (z.B. drei) Problembeschreibungen PB2 in der Reihenfolge ihrer jeweils zugeordneten Relevanzzahlen Z2 an. In dem Schema gemäß Fig. 3 ist dies durch einen von der zweiten Stufe 76 nach links abgehenden Pfeil 81 angedeutet. Beispielsweise werden auf diese Weise durch die zweite Stufe 76 folgende Problembeschreibungen PB2 zur Auswahl angezeigt:

- "eigene Stimme zu laut"

- "eigene Stimme zu leise"

- "eigene Stimme nasal"

Des Weiteren wird vorzugsweise wiederum das Feld

- "Keines der vorstehend genannten Probleme"

zur Auswahl angezeigt. Wenn der Nutzer dieses Feld auswählt, werden durch die zweite Stufe 76 die drei Problembeschreibungen PB2 mit den nächstkleineren Relevanzzahlen Z2 angezeigt. Wenn der Nutzer dagegen eine drei angezeigten Problembeschreibungen PB2 (z.B. die zweite Problembeschreibung "eigene Stimme zu leise") auswählt, wird diese Auswahl SP2 durch den Problem-Klassifikator 44 ausgegeben.

Anhand der Auswahl SP1 und SP2 werden die relativen Häufigkeiten h1 bzw. h2 in den Listen 78 und 80 angepasst, indem die relativen Häufigkeiten h1 und h2 der jeweils von dem Nutzer ausgewählten Problembeschreibung PB1 bzw. PB2 entsprechend erhöht werden. Somit passt sich der Problem-Klassifikator 44 selbstlernend dem Auswahlverhalten des Nutzers an: Diejenigen Problembeschreibungen PB1 und PB2, die von dem Nutzer häufig ausgewählt werden, werden von dem Problem-Klassifikator 44 mit höherer Priorität (d.h. häufiger und weiter vorne in der Reihenfolge angezeigt als solche Problembeschreibungen PB1 und PB2, die der Nutzer weniger häufig auswählt.

In alternativen Ausführungen weist der Problem-Klassifikator 44 nur eine Stufe oder mehr als zwei Stufen auf. Wiederum alternativ ist der Problem-Klassifikator 44, ähnlich wie der nachfolgend beschriebene Lösungs-Klassifikator 50, auf Basis eines künstlichen neuronalen Netzwerkes ausgebildet.

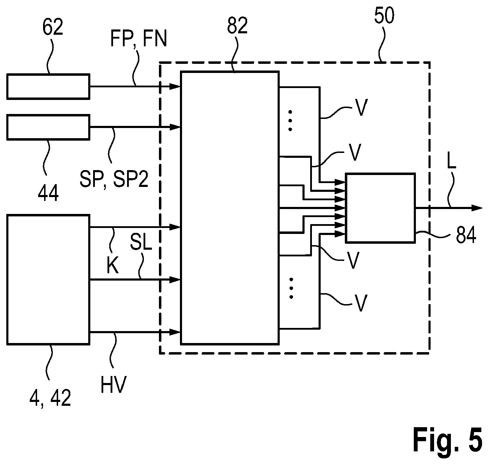

Wie vorstehend erwähnt, umfasst der Lösungs-Klassifikator 50 als zentrale Struktur ein (in Fig. 5 nur schematisch dargestelltes) künstliches neuronales Netzwerk (kurz ANN 82), das vorzugsweise als vollvernetztes mehrschichtiges FeedForward-Netzwerk, beispielsweise mit einer Eingangsschicht (Input Layer), einer Ausgangsschicht (Output Layer) und einer oder mehreren verdeckten Schichten (Hidden Layers) von künstlichen Neuronen, ausgebildet ist.

Über den Datenabrufblock 42 der Anpassungseinheit 6 erhalten der Lösungs-Klassifikator 50 (und damit das ANN 82) aus dem Hörinstrument 4 als Eingangsgrößen die Geräuschklasse K, den durchschnittlichen Schallpegel SL, sowie die Hörverlustdaten HV. Als weitere Eingangsgrößen erhalten der Lösungs-Klassifikator 50 (und damit das ANN 82) von dem Problem-Klassifikator 44 die Auswahl SP (bzw. im Falle des zweistufigen Problem-Klassifikators 44 aus Fig. 3 und 4 die Auswahl SP2) bezüglich des zu lösenden Problems.

Anhand dieser Eingangsgrößen gibt das ANN 82, das im Betrieb des Hörsystems 4 in trainiertem Zustand vorliegt, für eine Anzahl vorgegebener möglicher Lösungen (z.B. 80 mögliche Lösungen) jeweils eine Wertzahl V aus, die den zu erwartenden Erfolg der jeweils zugeordneten Lösung charakterisiert. In zweckmäßiger Ausführung des ANN 82 ist hierzu jedes Neuron der Ausgangsschicht des ANN 82 einer bestimmten möglichen Lösung zugeordnet. In dem vorstehend genannten Beispiel enthält das ANN 82 somit zur Bewertung von 80 möglichen Lösungen 80 Neuronen in seiner Ausgangsschicht. Der Ausgangswert des jeweiligen Neurons gibt die Wertzahl V der zugeordneten Lösung wieder.

In einem dem ANN 82 nachgeschalteten Validierungsblock 84 wählt der Lösungs-Klassifikator 50 anhand der Wertzahlen V einen dieser mehreren Lösungsvorschläge L aus und zeigt ihn - wie vorstehend beschrieben - dem Nutzer an. In einer einfachen und zweckmäßigen Implementierung schlägt der Validierungsblock 84 hierbei die zur Verfügung stehenden Lösungen stets deterministisch in der Reihenfolge ihrer zugeordneten Wertzahlen V vor: Zunächst wird die Lösung mit der maximalen Wertzahl V ausgewählt, im Falle einer Ablehnung durch den Nutzer dann die Lösung mit der nächstniedrigeren Wertzahl, etc. In einer verfeinerten Ausführung wählt der Validierungsblock 84 unter einer Anzahl von Lösungen mit besonders hohen Wertzahlen V (z.B. unter den fünf Lösungen mit den höchsten Wertzahlen V) eine Lösung nach einem Zufallsprinzip aus, um die Entropie der Lösungsvorschläge L zu erhöhen und somit die Lerneffizienz des ANN 82 zu verbessern.

Die dem jeweiligen Lösungsvorschlag L zugeordnete Bewertung des Nutzers, also die positive oder negative Rückmeldung FP bzw. FN verwendet das ANN 82 als sogenannten Reward. Mittels üblicher Methoden des sogenannten Bestärkenden Lernens (Reinforcement Learning) wird die Konfiguration des ANN 82 anhand des Rewards angepasst. Auch der Lösungs-Klassifikator 50 passt sich somit selbstlernend an das Nutzerverhalten an. Diejenigen Lösungsvorschläge L, die positiv (oder nicht negativ) bewertet wurden, werden im Zuge dieser Anpassung mit höherer Priorität (d.h. häufiger und/oder hinsichtlich der Reihenfolge an höherer Stelle) vorgeschlagen als solche Lösungsvorschläge L, die negativ bewertet wurden.

Im Zuge der Entwicklung und Weiterentwicklung des Hörsystems 4 wird das ANN 82 herstellerseitig (insbesondere vor der Auslieferung des Hörsystems 4 an den Nutzer) anhand der in der Wissensdatenbank 38 enthaltenen Datensätze D einer Vielzahl von Nutzern mittels üblicher Methoden des Bestärkenden Lernens (Reinforcement Learning), insbesondere unter Nutzung eines Gradientenabstiegsverfahrens, trainiert. Alternativ hierzu oder zusätzlich (z.B. solange die Wissensdatenbank 38 in ihrer Aufbauphase noch nicht genügend Datensätze D aus dem realen Alltag von Nutzern enthält) werden für das Training des ANN 82 entsprechende Datensätze D künstlich durch Audiologen erzeugt.

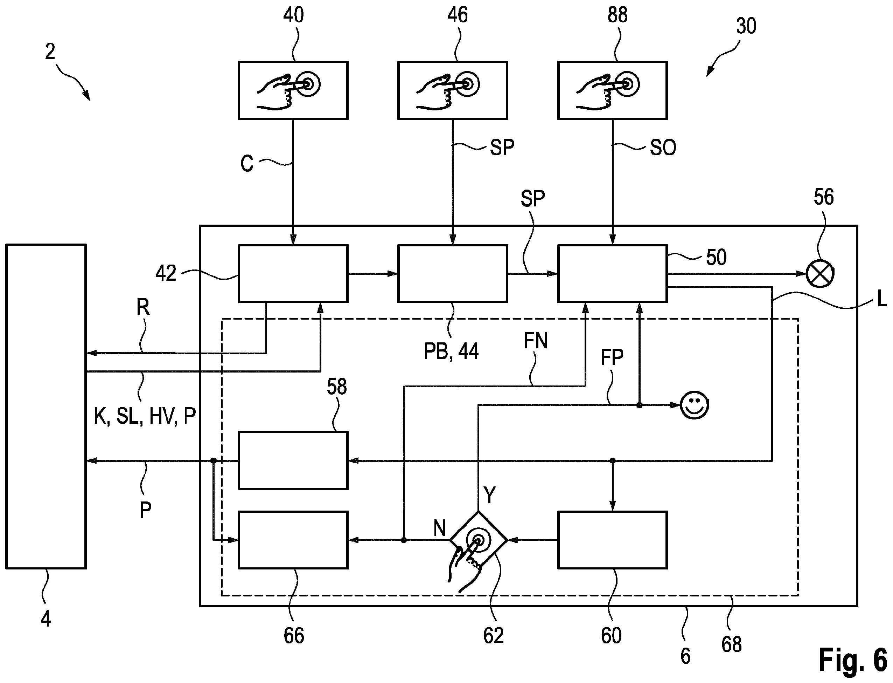

Eine Variante der Anpassungseinheit 6 ist in Fig. 6 dargestellt. Diese unterscheidet sich von der Anpassungseinheit 6 aus Fig. 2 darin, dass hier durch den Lösungs-Klassifikator 50 dem Nutzer mehrere Lösungsvorschläge L gleichzeitig auf dem Display des Smartphone 30 zur Auswahl angezeigt werden. Der Nutzer wählt hierauf durch Betätigung einer auf dem Display des Smartphones 30 eingeblendeten Schaltfläche 88 (wiederum z.B. durch Antippen mit dem Finger) einen der angezeigten Lösungsvorschläge L aus. Der dieser Auswahl SO entsprechende Lösungsvorschlag L wird dann - entweder unmittelbar, wie in Fig. 6 dargestellt, oder nach einer nochmaligen Bestätigung durch den Nutzer - in dem Hörinstrument 4 umgesetzt. Sofern der Nutzer keinen der angebotenen Lösungsvorschläge L auswählt, wird das Verfahren in Block 56 beendet.

Vorzugsweise werden auch bei dieser Variante der Anpassungseinheit 6 bei jeder positiven oder negativen Rückmeldung FP bzw. FN die ursprünglichen Werte der Signalverarbeitungsparameter P, die erhobenen Umgebungs- und Nutzerdaten, die Auswahl SP und der jeweilige Lösungsvorschlag L zusammen mit der zugehörigen Bewertung (d.h. der positiven oder negativen Rückmeldung FP bzw. FN) in einem Datensatz D in die Wissensdatenbank 38 hochgeladen.

In allen vorstehend beschriebenen Ausführungsbeispielen kann die Kommunikation zwischen der Anpassungseinheit 6 und dem Nutzer auch akustisch per Sprachsteuerung erfolgen. Die Anpassungseinheit 6 gibt die Problembeschreibungen PB, PB1, PB2 und Lösungsvorschläge L dabei durch automatisch generierte, gesprochene Sprache über den Lautsprecher des Smartphones 30 und/oder - bevorzugt - über den Ausgangswandler 14 des Hörinstruments 4 aus und empfängt die Auswahl SP, SP1, SP2 und gegebenenfalls SO über das Mikrophon des Smartphones 30 und/oder - wiederum bevorzugt - über die Eingangswandler 10 des Hörinstruments 4.

Die Erfindung wird an den vorstehend beschriebenen Ausführungsbeispielen besonders deutlich, ist auf diese Ausführungsbeispiele aber nicht beschränkt. Vielmehr können zahlreiche weitere Ausführungsformen der Erfindung aus den Ansprüchen und der vorstehenden Beschreibung abgeleitet werden.

Bezugszeichenliste

| | |
|---|---|
| 2 | Hörsystem |
| 4 | Hörinstrument |
| 6 | Anpassungseinheit |
| 8 | Gehäuse |

| 10 | Eingangswandler |
|----|----------------|
| 12 | Signalverarbeitungseinheit |
| 14 | Ausgangswandler |
| 16 | Batterie |
| 18 | Funk-Transceiver |
| 20 | Speicher |
| 22 | Geräusch-Klassifikator |
| 24 | Pegelmesser |
| 26 | Schallkanal |
| 28 | Spitze |
| 30 | Smartphone |
| 32 | Bluetooth-Verbindung |
| 34 | Datenkommunikationseinrichtung |
| 36 | Cloud |
| 38 | Wissensdatenbank |
| 40 | Schaltfläche |
| 42 | Datenabrufblock |
| 44 | Problem-Klassifikator |
| 46 | Schaltfläche |
| 50 | Lösungs-Klassifikator |
| 52 | Block |
| 54 | Schaltfläche |
| 56 | Block |
| 58 | Block |
| 60 | Block |
| 62 | Schaltfläche |
| 64 | Schaltfläche |
| 66 | Block |
| 68 | Auswertungsmodul |
| 70 | Liste |
| 72 | (erste) Stufe |
| 74 | Liste |
| 76 | (zweite) Stufe |
| 78 | Liste |
| 79 | Pfeil |
| 80 | Liste |
| 81 | Pfeil |
| 82 | ANN |
| 84 | Validierungsblock |
| 86 | Trainingsmodul |
| 88 | Schaltfläche |

| A | Audiosignal |
|----|------------|
| AM | (modifiziertes) Schallsignal |
| C | Startbefehl |
| D | Datensatz |
| E | (elektrische) Energie |
| FN | (negative) Rückmeldung |
| FP | (positive) Rückmeldung |
| g1 | Gewichtszahl |
| g2 | Gewichtszahl |
| h1 | (relative Auswahl-)Häufigkeit |
| h2 | (relative Auswahl-)Häufigkeit |
| HV | Hörverlustdaten |
| K | Geräuschklasse |
| L | Lösungsvorschlag |
| L' | Lösungsvorschlag |
| P | Signalverarbeitungsparameter |

| PB | Problembeschreibung |
|-----|---------------------|
| PB1 | Problembeschreibung |
| PB2 | Problembeschreibung |
| q | (binäre) Größe |
| R | Aufforderung |
| RD | Zufallszahl |
| SL | Schallpegel |
| SO | Auswahl |
| SP | Auswahl |
| SP1 | Auswahl |
| SP2 | Auswahl |
| V | Wertzahl |
| W | Reward |
| Z1 | Relevanzzahl |
| Z2 | Relevanzzahl |

**Patentansprüche**

1. Verfahren zur Anpassung eines Hörinstruments (4), in welchem ein mittels eines Eingangswandlers (10) aufgenommenes Audiosignal (A) eines Umgebungsschalls nach Maßgabe einer Vielzahl von Signalverarbeitungsparametern (P) modifiziert wird,

   - wobei einem Nutzer des Hörinstruments (4) mittels eines ersten Klassifikators (44) eine Mehrzahl von Problembeschreibungen (PB, PB1, PB2) zur Auswahl angeboten werden,
   - wobei durch den ersten Klassifikator (44) die angebotenen Problembeschreibungen (PB,PB1,PB2) und/oder deren Reihenfolge anhand von Umgebungsdaten, die die akustische Umgebung des Hörinstruments (4) charakterisieren, und/oder anhand von Nutzerdaten, die den Nutzer charakterisieren, vorausgewählt werden,
   - wobei anhand einer von dem Nutzer getroffenen Auswahl (SP,SP2) einer der angebotenen Problembeschreibungen (PB,PB2) mittels eines zweiten Klassifikators (50) ein Lösungsvorschlag (L) für geänderte Werte der Signalverarbeitungsparameter (P) ermittelt wird,
   **dadurch gekennzeichnet,**
   - **dass** durch den ersten Klassifikator (44) Auswahlhäufigkeiten (h1, h2), mit denen die angebotenen Problembeschreibungen (PB, PB1, PB2) von dem Nutzer ausgewählt werden, erfasst werden, und
   - **dass** durch den ersten Klassifikator (44) die angebotenen Problembeschreibungen (PB, PB1, PB2) und/oder deren Reihenfolge anhand der erfassten Auswahlhäufigkeiten (h1, h2) vorausgewählt werden.

2. Verfahren nach Anspruch 1, wobei durch den zweiten Klassifikator (50) der Lösungsvorschlag (L) zusätzlich anhand von Umgebungsdaten, die die akustische Umgebung des Hörinstruments (4) charakterisieren, und/oder anhand von Nutzerdaten, die den Nutzer charakterisieren, ermittelt wird.

3. Verfahren nach Anspruch 1 oder 2,

wobei durch den ersten Klassifikator (44) und/oder durch den zweiten Klassifikator (50) als Umgebungsdaten,

- ein durchschnittlicher Pegel (SP) des aufgenommenen Audiosignals (A),
- ein durchschnittliches Signal-Rauschverhältnis des aufgenommenen Audiosignals (A),
- eine dem Audiosignal (A) zugeordnete Geräuschklasse (K), und/oder
- Daten über Windaktivität,

herangezogen werden.

4. Verfahren nach einem der Ansprüche 1 bis 3, wobei durch den ersten Klassifikator (44) und/oder durch den zweiten Klassifikator (50) als Nutzerdaten,

- Daten (HV), die ein Hörvermögen des Nutzers charakterisieren,
- Daten, die die akustische Kopplung des Hörinstruments (4) mit dem Nutzer charakterisieren,
- Daten bezüglich des Typs des Hörinstruments,
- das Alter des Nutzers,
- das Geschlecht des Nutzes,
- ein Aktivitätsgrad des Nutzers,
- ein Aufenthaltsort des Nutzers,
- die Sprache des Nutzers und/oder
- ein Maß für die Beratungsbedürftigkeit des Nutzers

herangezogen werden.

5. Verfahren nach einem der Ansprüche 1 bis 4,

- wobei die dem Lösungsvorschlag (L) entsprechenden geänderten Werte der Signalverarbeitungsparameter (P) in dem Hörinstrument (4) eingestellt werden,
- wobei der Nutzer zu einer Bewertung des Lösungsvorschlags (L) aufgefordert wird, und
- wobei je nach dem Inhalt der Bewertung die dem Lösungsvorschlag (L) entsprechenden geänderten Werte der Signalverarbeitungsparameter (P) in dem Hörinstrument (4) beibehalten oder verworfen werden.

6. Verfahren nach Anspruch 5,

- wobei mittels des zweiten Klassifikators (50) ein alternativer Lösungsvorschlag (L) für geänderte Werte der Signalverarbeitungsparameter (P) ermittelt wird, und
- wobei im Fall einer negativen Bewertung eines vorherigen Lösungsvorschlags (L) die dem alternativen Lösungsvorschlag (L) entsprechenden geänderten Werte der Signalverarbeitungsparameter (P) in dem Hörinstrument (4) eingestellt werden.

7. Verfahren nach Anspruch 5 oder 6, wobei durch den zweiten Klassifikator (50) der oder jeder Lösungsvorschlag (L) zusätzlich anhand von früheren Bewertungen ermittelt wird.

8. Verfahren nach einem der Ansprüche 1 bis 7, wobei die von dem Nutzer getroffene Auswahl (SP, SP2) einer der angebotenen Problembeschreibungen (PB, PB2) sowie der oder jeder Lösungsvorschlag (L) und gegebenenfalls die zugehörige Bewertung als Datensatz (D) einer Wissensdatenbank (38) zugeführt wird, die entsprechende Datensätze (D) einer Vielzahl von Nutzern enthält, und wobei Voreinstellungen des ersten Klassifikators (44) und/oder des zweiten Klassifikators (50) anhand der in der Wissensdatenbank (38) enthaltenen Datensätze (D) ermittelt werden.

9. Hörsystem (2) mit einem Hörinstrument (4), das einen Eingangswandler (10) zur Aufnahme eines Audiosignals (A) eines Umgebungsschalls und eine Signalverarbeitungseinheit (12) zur Modifizierung des Audiosignals (A) nach Maßgabe einer Vielzahl von Signalverarbeitungsparametern (P) umfasst, sowie mit einer Anpassungseinheit (6) zur Anpassung des Hörinstruments (4),

- wobei die Anpassungseinheit (6) einen ersten Klassifikator (44) und einen zweiten Klassifikator (50) enthält,
- wobei der erste Klassifikator (44) dazu eingerichtet ist, einem Nutzer des Hörinstruments (4) eine Mehrzahl von Problembeschreibungen (PB, PB1, PB2) zur Auswahl anzubieten,
- wobei der erste Klassifikator (44) dazu eingerichtet ist, die angebotenen Problembeschreibungen (PB, PB1, PB2) und/oder deren Reihenfolge anhand von Umgebungsdaten, die die akustische Umgebung des Hörinstruments (4) charakterisieren, und/oder anhand von Nutzerdaten, die den Nutzer charakterisieren, vorauszuwählen, und
- wobei der zweite Klassifikator (50) dazu eingerichtet ist, anhand einer von dem Nutzer getroffenen Auswahl (SP, SP1, SP2) einer der angebotenen Problembeschreibungen (PB, PB1, PB2) einen Lösungsvorschlag (L) für geänderte Werte der Signalverarbeitungsparameter (P) zu ermitteln

**dadurch gekennzeichnet,**
**dass** der erste Klassifikator (44) dazu eingerichtet ist, Auswahlhäufigkeiten (h1, h2), mit denen die angebotenen Problembeschreibungen (PB, PB1, PB2) von dem Nutzer ausgewählt werden, zu erfassen, und die angebotenen Problembeschreibungen (PB, PB1, PB2) und/oder deren Reihenfolge zusätzlich anhand der erfassten Auswahlhäufigkeiten (h1, h2) vorauszuwählen.

10. Hörsystem (2) nach Anspruch 9,
wobei der zweite Klassifikator (50) dazu eingerichtet ist, den Lösungsvorschlag (L) zusätzlich anhand von Umgebungsdaten, die die akustische Umgebung des Hörinstruments (4) charakterisieren, und/oder anhand von Nutzerdaten, die den Nutzer charakterisieren, zu ermitteln.

11. Hörsystem (2) nach Anspruch 9 oder 10,
wobei der erste Klassifikator (44) und/oder der zweite Klassifikator (50) dazu eingerichtet sind, als Nutzerdaten,

- Daten (HV), die ein Hörvermögen des Nutzers charakterisieren,
- Daten, die die akustische Kopplung des Hörinstruments (4) mit dem Nutzer charakterisieren,
- Daten bezüglich des Typs des Hörinstruments (4),
- das Alter des Nutzers,
- das Geschlecht des Nutzes,
- einen Aktivitätsgrad des Nutzers
- den Aufenthaltsort des Nutzers,
- die Sprache des Nutzers und/oder
- ein Maß für die Beratungsbedürftigkeit des Nutzers

heranzuziehen.

12. Hörsystem (2) nach einem der Ansprüche 9 bis 11,

wobei der erste Klassifikator (44) und/oder der zweite Klassifikator (50) dazu eingerichtet sind, als Umgebungsdaten,

- einen durchschnittlichen Pegel (SP) des aufgenommenen Audiosignals (A),
- ein durchschnittliches Signal-Rauschverhältnis des aufgenommenen Audiosignals (A),
- eine dem Audiosignal (A) zugeordnete Geräuschklasse (K) und/oder
- Daten über Windaktivität

heranzuziehen.

13. Hörsystem (2) nach einem der Ansprüche 9 bis 12, wobei die Anpassungseinheit (6) ein Auswertungsmodul (68) umfasst, das dazu eingerichtet ist, die dem Lösungsvorschlag (L) entsprechenden geänderten Werte der Signalverarbeitungsparameter (P) in dem Hörinstrument (4) einzustellen, den Nutzer zu einer Bewertung des Lösungsvorschlags (L) aufzufordern, und je nach dem Inhalt der Bewertung die dem Lösungsvorschlag (L) entsprechenden geänderten Werte der Signalverarbeitungsparameter (P) in dem Hörinstrument (4) beizubehalten oder zu verwerfen.

14. Hörsystem (2) nach Anspruch 13,

- wobei der zweite Klassifikator (50) dazu eingerichtet ist, einen alternativen Lösungsvorschlag (L) für geänderte Werte der Signalverarbeitungsparameter (P) zu ermitteln wird, und
- wobei das Auswertungsmodul (68) dazu eingerichtet ist, im Fall einer negativen Bewertung eines vorherigen Lösungsvorschlags (L) die dem alternativen Lösungsvorschlag (L) entsprechenden geänderten Werte der Signalverarbeitungsparameter (P) in dem Hörinstrument (4) einzustellen.

15. Hörsystem (2) nach Anspruch 13 oder 14,
wobei der zweite Klassifikator (50) dazu eingerichtet ist, den oder jeden Lösungsvorschlag (L) zusätzlich anhand von früheren Bewertungen zu ermitteln.

16. Hörsystem (2) nach einem der Ansprüche 9 bis 15, wobei der erste Klassifikator (44) und/oder der zweite Klassifikator (50) als künstliches neuronales Netzwerk (82), insbesondere als vollvernetztes, mehrschichtiges Feedforward-Netzwerk oder als Entscheidungsbaum ausgebildet sind.

**Claims**

1. A method for fitting a hearing instrument (4), in which an audio signal (A) of an ambient sound recorded by means of an input transducer (10) is modified according to a large number of signal processing parameters (P),

- wherein a plurality of problem descriptions (PB, PB1, PB2) are offered for selection to a user of the hearing instrument (4) by means of a first classifier (44),
- wherein the offered problem descriptions (PB, PB1, PB2) and/or their sequence are preselected by the first classifier (44) on the basis of surroundings data, which characterize the acoustic surroundings of the hearing instrument (4), and/or on the basis of user data, which characterize the user,
- wherein a proposed solution (L) for changed values of the signal processing parameters (P) is ascertained on the basis of a selection (SP, SP2) made by the user of one of the offered problem descriptions (PB, PB2) by means of a second classifier (50),

**characterized in that**

- selection frequencies (h1, h2), by which the offered problem descriptions (PB, PB1, PB2) are selected by the user, are detected by the first classifier (44), and
- the offered problem descriptions (PB, PB1, PB2) and/or their sequence are preselected on the basis of the detected selection frequencies (h1, h2) by the first classifier (44).

2. A method as claimed in claim 1, wherein the proposed solution (L) is additionally ascertained by the second classifier (50) on the basis of surroundings data, which characterize the acoustic surroundings of the hearing instrument (4), and/or on the basis of user data, which characterize the user.

3. The method as claimed in claim 1 or 2,

wherein

- an average level (SP) of the recorded audio signal (A),
- an average signal-to-noise ratio of the recorded audio signal (A),
- a sound class (K) assigned to the audio signal (A), and/or
- data about wind activity,

are used by the first classifier (44) and/or by the second classifier (50) as surroundings data.

4. The method as claimed in any one of claims 1 to 3, wherein

- data (HV) which characterize a hearing ability of the user,
- data which characterize the acoustic coupling of the hearing instrument (4) with the user,
- data with respect to the type of the hearing instrument,
- the age of the user,
- the sex of the user,
- a degree of activity of the user,
- a residence of the user,
- the language of the user, and/or

- a measure of the need of the user for consultation

are used by the first classifier (44) and/or by the second classifier (50) as user data.

5. The method as claimed in any one of claims 1 to 4,

- wherein the values of the signal processing parameters (P) changed according to the proposed solution (L) are set in the hearing instrument (4),
- wherein the user is prompted to assess the proposed solution (L), and
- wherein depending on the content of the assessment, the values of the signal processing parameters (P) changed according to the proposed solution (L) are retained in the hearing instrument (4) or discarded.

6. The method as claimed in claim 5,

- wherein an alternative proposed solution (L) for changed values of the signal processing parameters (P) is ascertained by means of the second classifier (50), and
- wherein in the case of a negative assessment of a prior proposed solution (L), the values of the signal processing parameters (P) changed according to the alternative proposed solution (L) are set in the hearing instrument (4).

7. The method as claimed in claim 5 or 6, wherein the or each proposed solution (L) is additionally ascertained on the basis of earlier assessments by the second classifier (50).

8. The method as claimed in any one of claims 1 to 7, wherein the selection (SP, SP2) made by the user of one of the offered problem descriptions (PB, PB2) and also the or each proposed solution (L) and possibly the associated assessment is supplied as a data set (D) to a knowledge database (38), which contains corresponding data sets (D) of a large number of users, and wherein presets of the first classifier (44) and/or the second classifier (50) are ascertained on the basis of the data sets (D) contained in the knowledge database (38).

9. A hearing system (2) having a hearing instrument (4), which comprises an input transducer (10) for recording an audio signal (A) of an ambient sound and a signal processing unit (12) for modifying the audio signal (A) according to a large number of signal processing parameters (P), and having a fitting unit (6) for fitting the hearing instrument (4),

- wherein the fitting unit (6) contains a first classifier (44) and a second classifier (50),
- wherein the first classifier (44) is configured to offer a plurality of problem descriptions (PB, PB1, PB2) for selection to a user of the hearing instrument (4),
- wherein the first classifier (44) is configured to preselect the offered problem descriptions (PB, PB1, PB2) and/or their sequence on the basis of surroundings data, which characterize the acoustic surroundings of the hearing instrument (4), and/or on the basis of user data, which characterize the user, and
- wherein the second classifier (50) is configured to ascertain a proposed solution (L) for changed values of the signal processing parameters (P) on the basis of a selection (SP, SP1, SP2) of one of the offered problem descriptions (PB, PB1, PB2) made by the user,

**characterized in that**
the first classifier (44) is configured to detect selection frequencies (h1, h2), by which the offered problem descriptions (PB, PB1, PB2) are selected by the user, and to preselect the offered problem descriptions (PB, PB1, PB2) and/or their sequence additionally on the basis of the detected selection frequencies (h1, h2).

10. The hearing system (2) as claimed in claim 9, wherein the second classifier (50) is configured to additionally ascertain the proposed solution (L) on the basis of surroundings data, which characterize the acoustic surroundings of the hearing instrument (4), and/or on the basis of user data, which characterize the user.

11. The hearing system (2) as claimed in claim 9 or 10, wherein the first classifier (44) and/or the second classifier (50) are configured to use

- data (HV) which characterize a hearing ability of the user,
- data which characterize the acoustic coupling of the hearing instrument (4) with the user,
- data with respect to the type of the hearing instrument (4),
- the age of the user,
- the sex of the user,
- a degree of activity of the user,
- a residence of the user,
- the language of the user, and/or
- a measure of the need of the user for consultation as user data.

12. The hearing system (2) as claimed in any one of claims 9 to 11,

wherein the first classifier (44) and/or the second classifier (50) are configured to use

- an average level (SP) of the recorded audio signal (A),
- an average signal-to-noise ratio of the recorded audio signal (A),
- a sound class (K) assigned to the audio signal (A), and/or
- data about wind activity

as surroundings data.

13. The hearing system (2) as claimed in any one of claims 9 to 12,
wherein the fitting unit (6) comprises an evaluation module (68), which is configured to set values of the signal processing parameters (P) changed according to the proposed solution (L) in the hearing instrument (4), to prompt the user for an assessment of the proposed solution (L), and, depending on the content of the assessment, to retain the values of the signal processing parameters (P) changed according to the proposed solution (L) in the hearing instrument (4) or discard them.

14. The hearing system (2) as claimed in claim 13,

- wherein the second classifier (50) is configured to ascertain an alternative proposed solution (L) for changed values of the signal processing parameters (P), and
- wherein the evaluation module (68) is configured, in case of a negative assessment of a prior proposed solution (L), to set the values of the signal processing parameters (P) changed according to the alternative proposed solution (L) in the hearing instrument (4).

15. The hearing system (2) as claimed in claim 13 or 14, wherein the second classifier (50) is configured to additionally ascertain the or each proposed solution (L) on the basis of earlier assessments.

16. The hearing system (2) as claimed in any one of claims 9 to 15,
wherein the first classifier (44) and/or the second classifier (50) are designed as an artificial neural network (82), in particular as a fully networked, multilayered feedforward network or as a decision tree.

**Revendications**

1. Procédé d'adaptation d'un instrument auditif (4), dans lequel un signal audio (A) d'un son ambiant capturé au moyen d'un transducteur d'entrée (10) est modifié en fonction d'une pluralité de paramètres de traitement du signal (P),

- une pluralité de descriptions de problèmes (PB, PB1, PB2) est proposée à la sélection à un utilisateur de l'instrument auditif (4) au moyen d'un premier classificateur (44),
- les descriptions de problèmes (PB, PB1, PB2) proposées et/ou leur ordre sont présélectionnés par le premier classificateur (44) sur la base de données d'environnement qui caractérisent l'environnement acoustique de l'instrument auditif (4), et/ou sur la base de données d'utilisateur qui caractérisent l'utilisateur,
- une proposition de solution (L) pour des valeurs modifiées des paramètres de traitement du signal (P) est déterminée au moyen d'un second classificateur (50) sur la base d'une sélection (SP, SP2) de l'une des descriptions de problèmes (PB, PB2) proposées par l'utilisateur, **caractérisé**
- **en ce que** des fréquences de sélection (h1, h2) avec lesquelles les descriptions de problèmes (PB, PB1, PB2) proposées sont sélectionnées par l'utilisateur, sont détectées par le premier classificateur (44), et
- **en ce que** les descriptions de problèmes (PB, PB1, PB2) proposées et/ou leur ordre sont présélectionnés par le premier classificateur (44) sur la base des fréquences de sélection (h1, h2) détectées.

2. Procédé selon la revendication 1,
dans lequel la proposition de solution (L) est déterminée par le second classificateur (50) en se basant en outre sur des données d'environnement qui caractérisent l'environnement acoustique de l'instrument auditif (4), et/ou sur des données d'utilisateur qui caractérisent l'utilisateur.

3. Procédé selon la revendication 1 ou 2,

dans lequel le premier classificateur (44) et/ou le second classificateur (50) utilise en tant que données d'environnement

- un niveau moyen (SP) du signal audio (A) acquis,
- un rapport signal/bruit moyen du signal audio (A) acquis,
- une classe de bruit (K) associée au signal audio (A), et/ou
- des données concernant l'activité

du vent.

4. Procédé selon l'une quelconque des revendications 1 à 3,

dans lequel le premier classificateur (44) et/ou le second classificateur (50) utilise en tant que données d'utilisateur :

- des données (HV) qui caractérisent une capacité auditive de l'utilisateur,
- des données qui caractérisent le couplage acoustique de l'instrument auditif (4) avec l'utilisateur,
- des données concernant le type de l'instrument auditif,
- l'âge de l'utilisateur,
- le sexe de l'utilisateur,
- un degré d'activité de l'utilisateur,
- un lieu de séjour de l'utilisateur,
- la langue de l'utilisateur, et/ou
- une mesure du besoin de conseil

de l'utilisateur.

5. Procédé selon l'une quelconque des revendications 1 à 4,

- dans lequel les valeurs modifiées des paramètres de traitement du signal (P) correspondant à la proposition de solution (L) sont réglées dans l'instrument auditif (4),
- dans lequel l'utilisateur est invité à évaluer la proposition de solution (L), et
- dans lequel les valeurs modifiées des paramètres de traitement du signal (P) correspondant à la proposition de solution (L) sont conservées ou rejetées dans l'instrument auditif (4) en fonction du contenu de l'évaluation.

6. Procédé selon la revendication 5,

- dans lequel une proposition de solution alternative (L) pour des valeurs modifiées des paramètres de traitement du signal (P) est déterminée au moyen du second classificateur (50), et
- dans lequel les valeurs modifiées des paramètres de traitement du signal (P) correspondant à la proposition de solution alternative (L) sont réglées dans l'instrument auditif (4) en cas d'évaluation négative d'une proposition de solution (L) précédente.

7. Procédé selon la revendication 5 ou 6,
dans lequel la ou chaque proposition de solution (L) est déterminée par le second classificateur (50) en se basant en outre sur des évaluations antérieures.

8. Procédé selon l'une quelconque des revendications 1 à 7,
dans lequel la sélection (SP, SP2) de l'une des descriptions de problèmes (PB, PB2) proposées par l'utilisateur ainsi que la ou chaque proposition de solution (L) et, le cas échéant, l'évaluation associée, sont introduites comme jeu de données (D) dans une base de connaissances (38) qui contient des jeux de données (D) correspondants d'une pluralité d'utilisateurs, et dans lequel les réglages par défaut du premier classificateur (44) et/ou du second classificateur (50) sont déterminés sur la base des jeux de données (D) contenus dans la base de connaissances (38).

9. Système auditif (2) comprenant un instrument auditif (4) qui comprend un transducteur d'entrée (10) destiné à acquérir un signal audio (A) d'un son ambiant et une unité de traitement du signal (12) destinée à modifier le signal audio (A) selon une pluralité de paramètres de traitement du signal (P), ainsi qu'une unité d'adaptation (6) destinée à adapter l'instrument auditif (4),

    - dans lequel l'unité d'adaptation (6) comprend un premier classificateur (44) et un second classificateur (50) ;
    - dans lequel le premier classificateur (44) est conçu pour proposer à la sélection à un utilisateur de l'instrument auditif (4) une pluralité de descriptions de problèmes (PB, PB1, PB2),
    - dans lequel le premier classificateur (44) est conçu pour présélectionner les descriptions de problèmes (PB, PB1, PB2) proposées et/ou leur ordre sur la base de données d'environnement qui caractérisent l'environnement acoustique de l'instrument auditif (4), et/ou sur la base de données d'utilisateur qui caractérisent l'utilisateur, et
    - le second classificateur (50) est conçu pour déterminer, sur la base d'une sélection (SP, SP1, SP2) de l'une des descriptions de problèmes (PB, PB1, PB2) proposées à l'utilisateur, une proposition de solution (L) pour des valeurs modifiées des paramètres de traitement du signal (P),

    **caractérisé**
    **en ce que** le premier classificateur (44) est configuré pour détecter les fréquences de sélection (h1, h2) avec lesquelles les descriptions de problèmes (PB, PB1, PB2) proposées sont sélectionnées par l'utilisateur, et pour présélectionner les descriptions de problèmes (PB, PB1, PB2) proposées et/ou leur ordre en se basant en outre sur les fréquences de sélection (h1, h2) détectées.

10. Système auditif (2) selon la revendication 9, dans lequel le second classificateur (50) est configuré pour déterminer la proposition de solution (L) en se basant en outre sur des données d'environnement qui caractérisent l'environnement acoustique de l'instrument auditif (4), et/ou sur des données d'utilisateur qui caractérisent l'utilisateur.

11. Système auditif (2) selon la revendication 9 ou 10, dans lequel le premier classificateur (44) et/ou le second classificateur (50) sont conçus pour utiliser en tant que données d'utilisateur

    - des données (HV) qui caractérisent une capacité auditive de l'utilisateur,
    - des données qui caractérisent le couplage acoustique de l'instrument auditif (4) avec l'utilisateur,
    - des données concernant le type de l'instrument auditif (4),
    - l'âge de l'utilisateur,
    - le sexe de l'utilisateur,
    - un degré d'activité de l'utilisateur
    - le lieu de séjour de l'utilisateur,
    - la langue de l'utilisateur, et/ou
    - une mesure du besoin de conseil

de l'utilisateur.

12. Système auditif (2) selon l'une quelconque des revendications 9 à 11,

    dans lequel le premier classificateur (44) et/ou le second classificateur (50) sont conçus pour utiliser en tant que données d'environnement

        - un niveau moyen (SP) du signal audio (A) acquis,
        - un rapport signal/bruit moyen du signal audio (A) acquis,
        - une classe de bruit (K) associée au signal audio (A), et/ou
        - des données concernant l'activité

    de l'utilisateur.

13. Système auditif (2) selon l'une quelconque des revendications 9 à 12, dans lequel l'unité d'adaptation (6) comprend un module d'évaluation (68) qui est conçu pour régler les valeurs modifiées des paramètres de traitement du signal (P) correspondant à la proposition de solution (L) dans l'instrument auditif (4), pour inviter l'utilisateur à évaluer la proposition de solution (L), et pour conserver ou rejeter, en fonction du contenu de l'évaluation, les valeurs modifiées des paramètres de traitement du signal (P) correspondant à la proposition de solution (L) dans l'instrument auditif (4).

14. Système auditif (2) selon la revendication 13,

    - dans lequel le second classificateur (50) est conçu pour déterminer une proposition de solution alternative (L) pour des valeurs modifiées des paramètres de traitement du signal (P), et

- dans lequel, en cas d'évaluation négative d'une proposition de solution (L) précédente, le module d'évaluation (68) est conçu pour régler les valeurs modifiées des paramètres de traitement du signal (P) correspondant à la proposition de solution alternative (L) dans l'instrument auditif (4).

15. Système auditif (2) selon la revendication 13 ou 14, dans lequel le second classificateur (50) est conçu pour déterminer la ou chaque proposition de solution (L) en se basant en outre sur des évaluations antérieures.

16. Système auditif (2) selon l'une quelconque des revendications 9 à 15, dans lequel le premier classificateur (44) et/ou le second classificateur (50) sont conçus sous la forme d'un réseau neuronal artificiel (82), en particulier sous la forme d'un réseau à action directe multicouche entièrement connecté ou d'un arbre de décision.

EP 3 840 418 B1

Fig. 1

19

**Fig. 2**

EP 3 840 418 B1

**Fig. 3**

Fig. 4

**Fig. 5**

Fig. 6

**IN DER BESCHREIBUNG AUFGEFÜHRTE DOKUMENTE**

**In der Beschreibung aufgeführte Patentdokumente**

- WO 2017118477 A1
- EP 2306756 A1
- US 2019149927 A1
- US 2019102142 A1
- EP 3236673 A1